(19) Europäisches Patentamt
European Patent Office
Office européen des brevets

(11) **EP 4 776 028 A1**

(12) **EUROPEAN PATENT APPLICATION**

(43) Date of publication:
**15.07.2026 Bulletin 2026/29**

(21) Application number: **25203101.8**

(22) Date of filing: **18.09.2025**

(51) International Patent Classification (IPC):
***G01S 13/90*** *(2006.01)* ***G01S 7/41*** *(2006.01)*

(52) Cooperative Patent Classification (CPC):
**G01S 13/9011; G01S 13/9019;** G01S 7/417

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.01.2025 IN 202521002124**

(71) Applicant: **Tata Consultancy Services Limited Maharashtra (IN)**

(72) Inventors:
• **ROKKAM, Krishna Kanth**
  **560066 Bengaluru, Karnataka (IN)**
• **GIGIE, Andrew**
  **560066 Bengaluru, Karnataka (IN)**
• **KUMAR, Achanna Anil**
  **560066 Bengaluru, Karnataka (IN)**
• **CHAKRAVARTY, Tapas**
  **700091 Kolkata, West Bengal (IN)**
• **PAL, Arpan**
  **700091 Kolkata, West Bengal (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR SAR IMAGING USING COMPLEX-VALUED LOCAL INTERPOLATION FUNCTION BASED RANGE MIGRATION ALGORITHM**

(57)    The Range Migration Algorithm (RMA) is widely used for SAR image reconstruction from backscattered signals. Traditional RMA relies on the Fast Fourier Transform (FFT), which is unsuitable for irregular scanning trajectories. An interpolator based reconstruction method, referred as Local Interpolation Function-based Range Migration Algorithm (LIF-RMA), is provided for SAR imaging. The LIF-RMA efficiently addresses challenges associated with irregularly sampled trajectories. The LIF-RMA utilizes a complex-valued encoder-decoder network to transform irregularly sampled, complex-valued backscattered data into uniformly sampled complex raw data. The complex-valued encoder maps the distorted raw data into a feature space, while the complex-valued decoder interpolates and predicts the interpolated complex raw data at missing spatial coordinates. This data is then processed through a 2D FFT block before being fed to RMA for final SAR image reconstruction. In this process, as the LIF is applied prior to RMA, it aids in preserving phase integrity.

receiving, via one or more hardware processors, a spatially irregular sampled complex raw data from a radar, as input data, wherein the spatially irregular sampled complex raw data is captured by the radar while moving along a trajectory with an irregular scanning geometry — 502

transforming, via the one or more hardware processors, the spatially irregular sampled complex raw data into a 2D feature map, using a complex-valued encoder of a trained complex-valued Local Interpolation Function (LIF) network — 504

predicting, via the one or more hardware processors, an interpolated complex raw data at one or more missing data points at one or more spatial coordinates, using a plurality of nearest latent codes from the 2D feature map and a plurality of query coordinates corresponding to a plurality of missing data points, by using complex-valued decoder of the trained complex-valued LIF network, wherein the plurality of nearest latent codes mitigate distortions caused by a plurality of irregular sampling and interpolation errors, wherein the predicted interpolated complex raw data is computed using a weighted average of the plurality of nearest latent codes, with associated plurality of weights determined by a Euclidean distance between each of the plurality of query coordinates $(x, y)$ and each of the plurality of nearest latent codes — 506

transforming, via the one or more hardware processors, the interpolated complex raw data into a frequency domain by using a 2D Fast Fourier Transform — 508

generating, via the one or more hardware processors, a reconstructed image based on the transformed frequency domain of interpolated complex raw data — 510

500

FIG. 5

**Description**

CROSS-REFERENCE TO RELATED APPLICATIONS AND PRIORITY

The present application claims priority to Indian application no. 202521002124 filed on January 9, 2025.

TECHNICAL FIELD

The disclosure herein generally relates to radar image processing, and, more particularly, to a method and system for Synthetic Aperture Radar (SAR) imaging using complex-valued local interpolation function based range migration algorithm.

BACKGROUND

Near-field microwave imaging has been widely researched and applied across diverse areas, including concealed weapon detection, medical diagnostics, autonomous navigation, defect detection, and through-wall imaging. This is mainly attributed due to its advantages such as the ability to penetrate materials, invariant to lighting conditions, and privacy-preserving features. Recent advances, like massive Multiple-Input Multiple-Output (MIMO) radar and millimeter-wave/terahertz imaging systems, have further improved its capabilities and expanded its applications.

Freehand Synthetic Aperture Radar (SAR) imaging involves capturing backscattered radar data from irregular scanning trajectories and employs various techniques to reconstruct the scene image. The integration of compact millimeter-wave (mmWave) radars into consumer devices, combined with the future potential of 6G networks, could significantly enhance the accessibility and effectiveness of these technologies. Current research in this field focuses on two main aspects: (1) developing systems for precise tracking and localization of the radar along with the collection of backscattered data, and (2) advancing SAR image reconstruction techniques to address artifacts caused by irregular scanning. Despite progress in tracking systems, challenges remain in SAR imaging with irregular scanning trajectories.

The Range Migration Algorithm (RMA) is widely used for SAR image reconstruction from backscattered signals. Traditional RMA relies on the Fast Fourier Transform (FFT), which is unsuitable for irregular scanning trajectories. To address this, Non-uniform Fast Fourier Transform (NUFFT)- based RMA has been introduced, where NUFFT employs an interpolator to obtain the missing measurements before applying RMA. However, NUFFT-RMA suffers from noticeable artifacts. Recent advancements aim to enhance SAR images obtained from NUFFT-RMA using deep learning techniques; which are collectively referred to as post-RMA processing. For example, denoising convolutional neural networks (DNCNNs) and conditional generative adversarial networks (CGANs) have been employed to refine images produced by NUFFT-RMA. Despite their advantages, these methods are difficult to generalize to diverse irregular sampling scales. Alternatively, another recent work uses a post-RMA approach using an implicit neural network-based method capable of generalizing across diverse sampling scales. While this approach improves image reconstruction, it remains a post-RMA technique and thus cannot fully recover distortions caused by the information loss introduced by the NUFFT interpolator.

SUMMARY

Embodiments of the present disclosure present technological improvements as solutions to one or more of the above-mentioned technical problems recognized by the inventors in conventional systems. For example, in one embodiment, a processor implemented method is provided. The method includes: receiving, via one or more hardware processors, a spatially irregular sampled complex raw data from a radar, as input data, wherein the spatially irregular sampled complex raw data is captured by the radar while moving along a trajectory with an irregular scanning geometry; transforming, via the one or more hardware processors, the spatially irregular sampled complex raw data into a 2-Dimensional (2D) feature map, using a complex-valued encoder of a trained complex-valued Local Interpolation Function (LIF) network; predicting, via the one or more hardware processors, an interpolated complex raw data at one or more missing data points at one or more spatial coordinates, using a plurality of nearest latent codes from the 2D feature map and a plurality of query coordinates corresponding to a plurality of missing data points, by using complex-valued decoder of the trained complex-valued LIF network, wherein the plurality of nearest latent codes mitigate distortions caused by a plurality of irregular sampling and interpolation errors, wherein the predicted interpolated complex raw data is computed using a weighted average of the plurality of nearest latent codes, with associated plurality of weights determined by a Euclidean distance between each of the plurality of query coordinates $(x, y)$ and each of the plurality of nearest latent codes; transforming, via the one or more hardware processors, the interpolated complex raw data into a frequency domain by using a 2D Fast Fourier Transform; and generating, via the one or more hardware processors, a reconstructed image based on the transformed frequency domain of interpolated complex raw data.

In an aspect of the method, the spatially irregular sampled complex raw data s, for a discrete frequency $\omega$, is

represented as:

$$s(x, y, \omega) = \iiint \rho(x', y', z') e^{-j2kR} \, dx' \, dy' \, dz',$$

where, $(x, y)$ is an array element coordinate that receives a backscattered response, $R$ is distance between the array element coordinate (x, y) and a plurality of target points $(x', y', z')$ in 3-Dimension, and $k$ denotes a wave number.

In another aspect of the method, the 2D feature map is represented as:

$$M \in C^{H \times W \times D},$$

where, $H$ and $W$ denote the spatial dimensions, and $D$ represents the depth of the feature map.

In another aspect of the method, the complex-valued Local Interpolation Function (LIF) network is trained by iteratively generating prediction of the spatially irregular sampled complex raw data at specific missing coordinates for a training data, such that the generated prediction matches an associated ground truth data, wherein the ground truth is a training dataset comprising densely sampled, uniformly spaced complex raw radar data, acquired by moving the radar in precise steps to create a dense SAR aperture, wherein the spatially irregular sampled complex raw data is iteratively refined at the specific missing coordinates to approximate the ground truth, addressing errors introduced by irregular scanning geometries, and wherein the LIF network is optimized by minimizing a loss between the predicted spatially irregular sampled complex data at the specific missing coordinates and the ground truth data.

In yet another aspect, a system is provided. The system includes one or more hardware processors, a communication interface, and a memory storing a plurality of instructions. The plurality of instructions cause the one or more hardware processors to: receive a spatially irregular sampled complex raw data from a radar, as input data, wherein the spatially irregular sampled complex raw data is captured by the radar while moving along a trajectory with an irregular scanning geometry; transform the spatially irregular sampled complex raw data into a 2D feature map, using a complex-valued encoder of a trained complex-valued Local Interpolation Function (LIF) network; predict an interpolated complex raw data at one or more missing data points at one or more spatial coordinates, using a plurality of nearest latent codes from the 2D feature map and a plurality of query coordinates corresponding to a plurality of missing data points, by using complex-valued decoder of the trained complex-valued LIF network, wherein the plurality of nearest latent codes mitigate distortions caused by a plurality of irregular sampling and interpolation errors, wherein the predicted interpolated complex raw data is computed using a weighted average of the plurality of nearest latent codes, with associated plurality of weights determined by a Euclidean distance between each of the plurality of query coordinates (x, y) and each of the plurality of nearest latent codes; transform the interpolated complex raw data into a frequency domain by using a 2D Fast Fourier Transform; and generate a reconstructed image based on the transformed frequency domain of interpolated complex raw data.

In another aspect of the system, the spatially irregular sampled complex raw data s, for a discrete frequency ω, is represented as:

$$s(x, y, \omega) = \iiint \rho(x', y', z') e^{-j2kR} \, dx' \, dy' \, dz',$$

where, $(x, y)$ is an array element coordinate that receives a backscattered response, R is distance between the array element coordinate (x, y) and a plurality of target points $(x', y', z')$ in 3-Dimension, and $k$ denotes a wave number.

In another aspect of the system, the 2D feature map is represented as:

$$M \in C^{H \times W \times D},$$

where, $H$ and W denote the spatial dimensions, and $D$ represents the depth of the feature map.

In another aspect of the system, the complex-valued Local Interpolation Function (LIF) network is trained by iteratively generating prediction of the spatially irregular sampled complex raw data at specific missing coordinates for a training data, such that the generated prediction matches an associated ground truth data, wherein the ground truth is a training dataset comprising densely sampled, uniformly spaced complex raw radar data, acquired by moving the radar in precise steps to create a dense SAR aperture, wherein the spatially irregular sampled complex raw data is iteratively refined at the specific missing coordinates to approximate the ground truth, addressing errors introduced by irregular scanning geometries, and wherein the LIF network is optimized by minimizing a loss between the predicted spatially irregular sampled complex raw data at the specific missing coordinates and the ground truth data.

In yet another aspect, one or more non-transitory machine-readable information storage mediums are provided. The one or more non-transitory machine-readable information storage mediums include a plurality of instructions, which when executed, cause one or more hardware processors to: receive a spatially irregular sampled complex raw data from a radar, as input data, wherein the spatially irregular sampled complex raw data is captured by the radar while moving along a trajectory with an irregular scanning geometry; transform the spatially irregular sampled complex raw data into a 2D feature map, using a complex-valued encoder of a trained complex-valued Local Interpolation Function (LIF) network; predict an interpolated complex raw data at one or more missing data points at one or more spatial coordinates, using a plurality of nearest latent codes from the 2D feature map and a plurality of query coordinates corresponding to a plurality of missing data points, by using complex-valued decoder of the trained complex-valued LIF network, wherein the plurality of nearest latent codes mitigate distortions caused by a plurality of irregular sampling and interpolation errors, wherein the predicted interpolated complex raw data is computed using a weighted average of the plurality of nearest latent codes, with associated plurality of weights determined by a Euclidean distance between each of the plurality of query coordinates (x, y) and each of the plurality of nearest latent codes; transform the interpolated complex raw data into a frequency domain by using a 2D Fast Fourier Transform; and generate a reconstructed image based on the transformed frequency domain of interpolated complex raw data.

In an aspect of the one or more non-transitory machine-readable information storage mediums, the spatially irregular sampled complex raw data s, for a discrete frequency ω, is represented as:

$$s(x, y, \omega) = \iiint \rho(x', y', z') e^{-j2kR} \, dx' \, dy' \, dz',$$

where, $(x, y)$ is an array element coordinate that receives a backscattered response, R is distance between the array element coordinate (x, y) and a plurality of target points $(x', y', z')$ in 3-Dimension, and $k$ denotes a wave number.

In an aspect of the one or more non-transitory machine-readable information storage mediums, the 2D feature map is represented as:

$$M \in C^{H \times W \times D},$$

where, $H$ and $W$ denote the spatial dimensions, and $D$ represents the depth of the feature map.

In another aspect of the one or more non-transitory machine-readable information storage mediums, the complex-valued Local Interpolation Function (LIF) network is trained by iteratively generating prediction of the spatially irregular sampled complex raw data at specific missing coordinates for a training data, such that the generated prediction matches an associated ground truth data, wherein the ground truth is a training dataset comprising densely sampled, uniformly spaced complex raw radar data, acquired by moving the radar in precise steps to create a dense SAR aperture, wherein the spatially irregular sampled complex raw data is iteratively refined at the specific missing coordinates to approximate the ground truth, addressing errors introduced by irregular scanning geometries, and wherein the LIF network is optimized by minimizing a loss between the predicted spatially irregular sampled complex raw data at the specific missing coordinates and the ground truth data.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for SAR image reconstruction using Local Interpolation Function-based Range Migration Algorithm (LIF-RMA) approach, according to some embodiments of the present disclosure.

FIG. 2 is an example diagram depicting SFCW radar performing data acquisition in an irregular 2D scanning trajectory, according to some embodiments of the present disclosure.

FIG. 3A is a block diagram depicting the LIF-RMA approach, used by the system of FIG. 1, according to some embodiments of the present disclosure.

FIG. 3B is an example diagram depicting a training phase of an LIF network, used by the system of FIG. 1, according to some embodiments of the present disclosure.

FIG. 4 is a block diagram depicting a complex valued encoder- decoder network architecture of the LIF network used in LIF-RMA approach, according to some embodiments of the present disclosure.

FIG. 5 is a flow diagram depicting steps involved in the process of SAR image reconstruction using the LIF-RMA approach, using the system of FIG. 1, in accordance with some embodiments of the present disclosure.

FIGS. 6A and 6B present the average Peak Signal to Noise Ratio (PSNR) and Structural Similarity Index Measure (SSIM) values across various sampling scales, in accordance with some embodiments of the present disclosure.

FIG. 7 presents visual reconstruction results for five different objects at a 60% sampling scale, with corresponding PSNR and SSIM values highlighted for each method, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In near-field microwave imaging Freehand Synthetic Aperture Radar (SAR) imaging involves capturing backscattered radar data from irregular scanning trajectories and employs various techniques to reconstruct the scene image. Current research in this field focuses on two main aspects: (1) developing systems for precise tracking and localization of the radar along with the collection of backscattered data, and (2) advancing SAR image reconstruction techniques to address artifacts caused by irregular scanning. Despite progress in tracking systems, challenges remain in SAR imaging with irregular scanning trajectories. The Range Migration Algorithm (RMA) is widely used for SAR image reconstruction from backscattered signals. Traditional RMA relies on the Fast Fourier Transform (FFT), which is unsuitable for irregular scanning trajectories. To address this, Non-uniform Fast Fourier Transform (NUFFT)-based RMA has been introduced, where NUFFT employs an interpolator to obtain the missing measurements before applying RMA. However, NUFFT-RMA suffers from noticeable artifacts. Recent advancements aim to enhance SAR images obtained from NUFFT-RMA using deep learning techniques; which are collectively referred to as post-RMA processing. For example, denoising convolutional neural networks (DNCNNs) and conditional generative adversarial networks (CGANs) have been employed to refine images produced by NUFFT-RMA. Despite their advantages, these methods are difficult to generalize to diverse irregular sampling scales. Alternatively, another recent work uses a post-RMA approach using an implicit neural network-based method capable of generalizing across diverse sampling scales. While this approach improves image reconstruction, it remains a post-RMA technique and thus cannot fully recover distortions caused by the information loss introduced by the NUFFT interpolator.

To address these challenges, interpolator based reconstruction method, referred as Local Interpolation Function-based Range Migration Algorithm (LIF-RMA), is provided for SAR imaging. The LIF-RMA efficiently addresses challenges associated with irregularly sampled trajectories. The LIF-RMA utilizes a complex-valued encoder-decoder network to transform irregularly sampled, complex-valued backscattered data into uniformly sampled complex raw data. The complex-valued encoder maps the distorted raw data into a feature space, while the complex-valued decoder interpolates and predicts the interpolated complex raw data at missing spatial coordinates. This data is then processed through a 2D FFT block before being fed to RMA for final SAR image reconstruction. In this process, as the LIF is applied prior to RMA, it aids in preserving phase integrity.

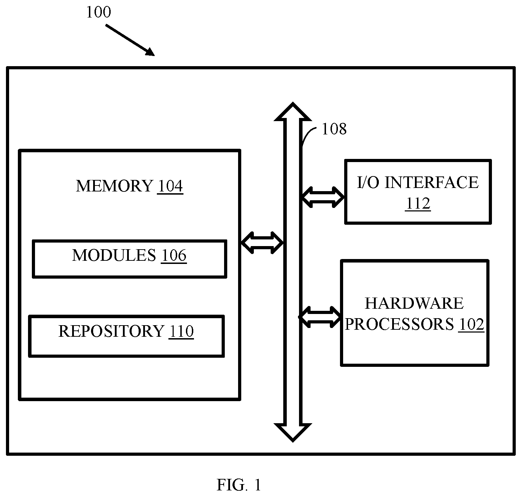

Referring now to the drawings, and more particularly to FIG. 1 through FIG. 7, where similar reference characters denote corresponding features consistently throughout the figures, there are shown preferred embodiments and these embodiments are described in the context of the following exemplary system and/or method.

FIG. 1 illustrates an exemplary system for SAR image reconstruction using Local Interpolation Function-based Range Migration Algorithm (LIF-RMA) approach, according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of SAR image reconstruction using Local Interpolation Function-based Range Migration Algorithm (LIF-RMA) approach, being performed by the system of FIG. 1. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the image reconstruction using the LIF-RMA approach.

The data repository (or repository) 110 may include a plurality of abstracted piece of code for refinement and data that is processed, received, or generated as a result of the execution of the plurality of modules in the module(s) 106.

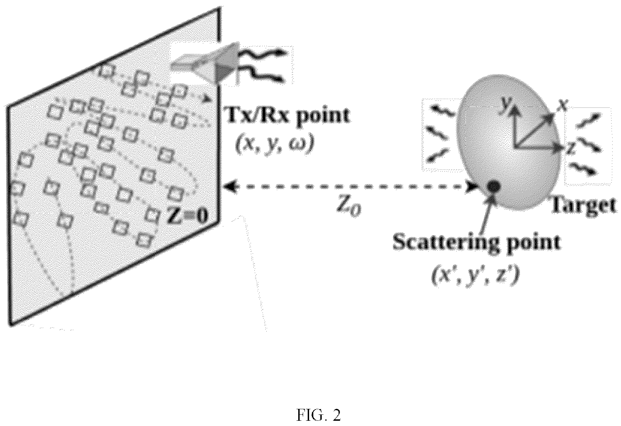

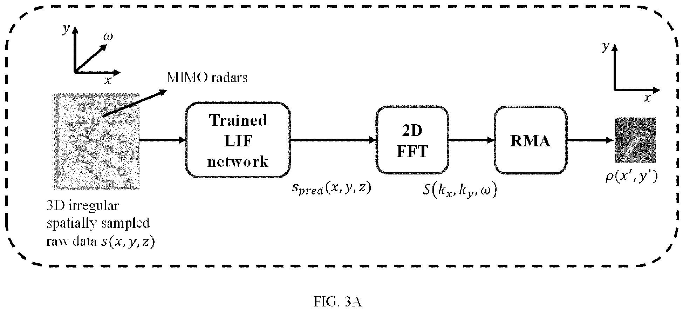

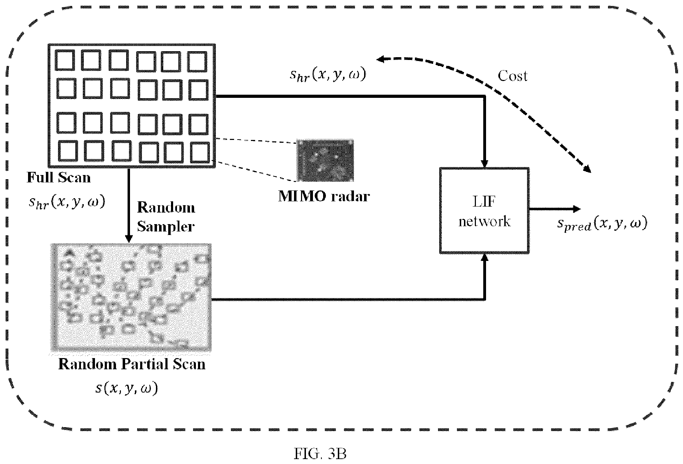

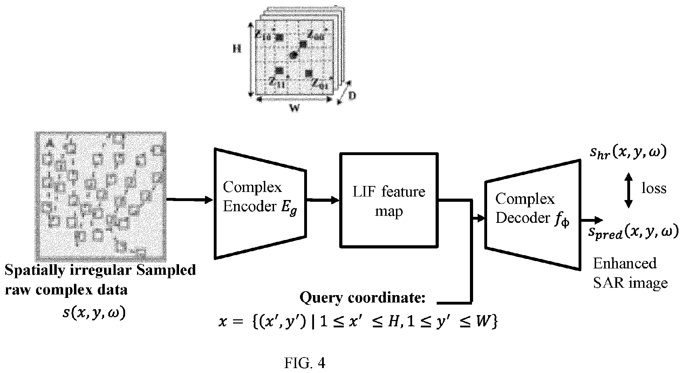

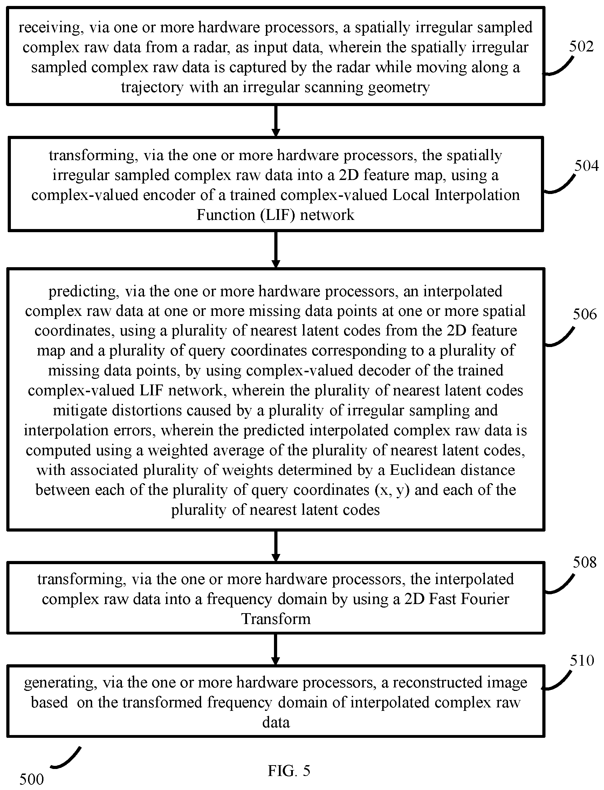

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Working of the system 100 is explained with reference to the stepped-frequency continuous wave (SFCW) radar system depicted in FIG. 2, the block diagram depicting the LIF-RMA approach as in FIG. 3A, the training of the LIF network as in FIG. 3B, the complex valued encoder- decoder network architecture of the LIF network as in FIG. 4, and the steps in the flow diagram as in FIG. 5.

FIG. 3B shows the block diagram for training a complex valued Local Interpolation Function (LIF) network (alternately referred to as complex valued LIF network) used in the LIF-RMA approach. The training dataset consists of densely sampled, uniformly spaced radar data, acquired by moving the radar in precise steps to create a dense SAR aperture, denoted as $s_{hr}(x, y, \omega)$, which serves as the ground truth. The input to the LIF network, $s(x, y, \omega)$, comprises of missing samples caused by irregular sampling. Since the LIF network is employed before the Range Migration Algorithm (RMA), the input is complex-valued and the LIF network needs to handle these complex inputs. The Local Interpolation Function (LIF) network is designed to map sampling coordinates $(x, y)$ from the irregularly sampled $s(x, y, \omega)$ to the uniformly sampled data $s_{pred}(x, y, \omega)$ using a deep neural network, trained using $s_{hr}(x, y, \omega)$. Block diagram depicting the complex valued encoder- decoder network architecture of the LIF network used in LIF-RMA approach is depicted in FIG. 4.

The irregularly sampled complex raw data $s(x, y, \omega)$ is first processed by a complex-valued encoder $E_\theta$, which transforms it into a complex-valued 2D feature map $M \in \mathbb{C}^{H*W*D}$, where H and W denote the spatial dimensions, and D represents depth of the feature map.

A complex-valued decoder then predicts the uniformly sampled data $s_{pred}(x, y, \omega)$ at specific missing coordinates $(x, y)$, using the nearest latent codes $z^* \in \mathbb{C}^{1*D}$ from the feature map, along with the query coordinates corresponding to the missing data points. These latent codes help mitigate distortions caused by irregular sampling and interpolation errors, producing $s_{pred}(x, y, \omega)$ that closely matches the ground truth $s_{hr}(x, y, \omega)$.

$$s_{pred}(x, y, \omega) = f_\theta\big(z^*, (x, y)\big), \qquad \text{--- (1)}$$

Where, $\{(x, y)|1 \leq x \leq H, 1 \leq y \leq W\}$

The LIF is a complex-valued network, enabling preservation of phase information, which is critical in radar signal processing. The encoder $E_\theta$ is designed using a residual learning framework, incorporating a 5-layer ResNet block that consists of complex-valued convolutional layers followed by complex ReLU activations. The decoder is a Multi-Layer Perceptron (MLP) with four complex linear layers, featuring a hidden dimension of 128 and complex ReLU activations to support non-linear transformations in the complex domain. To improve interpolation, the LIF mechanism is enhanced by considering four nearest latent codes for a given query point, rather than relying solely on the closest latent code $z^*$. The predicted value $s_{pred}(x, y, \omega)$ is computed using a weighted average of these latent codes, with the weights determined by the Euclidean distance between the query coordinate $(x, y)$ and each latent code $z_n^*$, as illustrated in FIG. 4.

$$s_{pred}(x, y, \omega) = \sum_{n=1}^{4} f_\phi(z_n^*, (x, y)) \frac{1}{\|z_n^* - (x,y)\|} \qquad \text{--- (2)}$$

This approach enables better capturing of variations in the input data by leveraging multiple nearby latent codes, improving the reconstruction of irregularly sampled complex raw data. The network iteratively refines the output, $s_{pred}(x, y, \omega)$, to approximate the ground truth $s_{hr}(x, y, \omega)$, addressing errors introduced by irregular scanning geometries. To optimize the LIF network, L1 loss $\mathcal{L}$ between the predicted SAR image $S_{pred}(x, y, \omega)$ and the ground truth image $s_{hr}(x, y, \omega)$ is minimized, as:

$$\mathcal{L} = -\frac{1}{N} \sum_{n=1}^{N} \left| s_{pred}(x, y, \omega) - s_{hr}(x, y, \omega) \right| \quad \text{--- (3)}$$

Where, $N$ represents total number of training instances. This loss function drives the optimization of both the complex-valued encoder $E_\theta$ and the decoding function $f_\phi$, minimizing reconstruction error while improving the network's ability to generalize to varied sampling patterns encountered in irregular SAR imaging.

FIG. 5 is a flow diagram depicting steps involved in the process of SAR image reconstruction using the LIF-RMA approach, using the system of FIG. 1, in accordance with some embodiments of the present disclosure. In an embodiment, the system 100 comprises one or more data storage devices or the memory 104 operatively coupled to the processor(s) 102 and is configured to store instructions for execution of steps of a method 200 in FIG. 2, by the processor(s) or one or more hardware processors 102. The steps of the method 500 of the present disclosure will now be explained with reference to the components or blocks of the system 100 as depicted in FIG. 1, (SFCW) radar system depicted in FIG. 2, the block diagram depicting the LIF-RMA approach as in FIG. 3A, the training of the LIF network as in FIG. 3B, the complex valued encoder- decoder network architecture of the LIF network used in LIF-RMA approach as in FIG. 4. As depicted in FIG. 3A, in a superior interpolator, directly operating on $s(x, y, \omega)$ is trained. The Local Interpolation Function (LIF) network maps the irregularly sampled coordinates $(x, y)$ to uniformly sampled complex raw data $s_{pred}(x, y, \omega)$ using a deep neural network. This improved interpolated data is then transformed to the frequency domain via a 2D FFT and processed through RMA to obtain an enhanced $\rho(x', y')$.

Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 502 of method 500 in FIG. 5, the system 100 receives, via the one or more hardware processors 102, a spatially irregular sampled complex raw data from a radar, as input data. The spatially irregular sampled complex raw data is captured by a radar while moving along a trajectory with an irregular scanning geometry. For example consider FIG. 2, in which a stepped-frequency continuous wave (SFCW) radar system is depicted. A radar in the SFCW radar system moves along a 2-Dimensional (2D) trajectory with an irregular scanning geometry, similar to freehand motion. Though there is an explicit reference to 2D trajectory, it is to be understood by a person skilled in the art that this can be extended to trajectories other than 2D (for example, a 3D trajectory). In an aspect of the method, the spatially irregular sampled complex raw data s, for a discrete frequency $\omega$, is represented as:

$$s(x, y, \omega) = \iiint \rho(x', y', z') e^{-j2kR} \, dx' \, dy' \, dz',$$

where, $(x, y)$ is an array element coordinate that receives a backscattered response, $R$ is distance between the array element coordinate $(x, y)$ and a plurality of target points $(x', y', z')$ in 3-Dimension, and $k$ denotes a wave number. When a 2D trajectory is considered, z value is 0.

Further, at step 504 of the method 500, the system 100 transforms, via the one or more hardware processors 102, the spatially irregular sampled complex raw data into a 2D feature map. The system 100 may use the complex-valued encoder of the trained complex-valued Local Interpolation Function (LIF) network for transforming the spatially irregular sampled complex raw data into the 2D feature map. The 2D feature map is represented as:

$$M \in C^{H \times W \times D},$$

where, $H$ and $W$ denote the spatial dimensions, and $D$ represents the depth of the feature map.

Further, at step 506 of the method 500, the system 100 predicts, via the one or more hardware processors 102, an interpolated complex raw data at one or more missing data points at one or more spatial coordinates, using a plurality of nearest latent codes from the 2D feature map and a plurality of query coordinates corresponding to a plurality of missing data points, by using the complex-valued decoder of the trained complex-valued LIF network. The plurality of nearest latent codes mitigate distortions caused by a plurality of irregular sampling and interpolation errors. The predicted interpolated complex raw data is computed using a weighted average of the plurality of nearest latent codes, with associated plurality of weights determined by the Euclidean distance between each of the plurality of query coordinates ($x$, $y$) and each of the plurality of nearest latent codes.

Further, at step 508 of the method 500, the system 100 transforms, via the one or more hardware processors 102, the interpolated complex raw data into a frequency domain by using a 2D Fast Fourier Transform. Then, at step 510 of the method 500, the system 100 generates, via the one or more hardware processors 102, a reconstructed image based on the transformed frequency domain of interpolated complex raw data. The system 100 uses the RMA approach for reconstructing the image. In this process, as the LIF is applied prior to RMA, it aids in preserving phase integrity. Apart from this, the LIF-RMA approach provides the following advantages:

- Improved Interpolation: As compared to state of the art irregular scanning techniques, which introduce artifacts due to interpolation errors, the LIF-RMA approach based approach provides a more robust interpolation which aids in reducing these artifacts, thereby providing an enhanced reconstructed image.
- Scalability to Irregular Sampling: The LIF-RMA approach utilizes a local feature space to predict values at any coordinate, hence allowing handling of a wide range of irregular sampling scales typical in any freehand imaging.
- Feature Preservation: Employing the LIF network before RMA preserves critical features and fine details, resulting in more accurate phase and amplitude information compared to post-RMA techniques, thus eliminating need for additional post-RMA enhancement.

Experimental Results:

During the experiments conducted, the LIF-RMA approach in method 300 was compared with a few other competing techniques. The data was collected using the ImageVK-74 SFCW MIMO radar ("Imagevk-74: 4d millimeter wave imaging kit," https://www.minicircuits.com/WebStore/imagevk 74.html.), which operated from 62 GHz to 69 GHz frequency range, with $\omega$ = 50 discrete frequency steps. This radar uses a 20 $\times$ 20 virtual array with Time-Division multiplexing (TDM) transmission, but a 2 $\times$ 3 MIMO configuration for data acquisition and commercial compatibility. The ground truth $s_{hr}$ ($x$, $y$, $\omega$) was obtained using a 2D mechanical scanner that provides precise, dense, and uniform measurements, thereby ensuring artifact-free SAR imaging.

This setup involved scanning a 100 $\times$ 100 grid, covering a 20 cm $\times$ 20 cm physical aperture. Additionally, irregular scanning was emulated by collecting data along specific tracked irregular trajectories. These trajectories were generated by random downsampling from the densely sampled ground truth data.

The LIF-RMA approach was compared against classical NUFFT-RMA, and several post-RMA image enhancement techniques, including RMA-CGAN (C. Vasileiou, J. Smith, S. Thiagarajan, M. Nigh, Y. Makris, and M. Torlak, "Efficient cnn-based super resolution algorithms for mmwave mobile radar imaging," in 2022 IEEE International Conference on Image Processing (ICIP), 2022, pp. 3803-3807), RMA-DNCNN (A. Gigie, R. K. Kanth, A. Kumar, T. Chakravarty, and A. Pal, "Cmc-rma: Compressed multi-coset range migration algorithm for mimo-SAR," in 2024 IEEE Radar Conference (RadarConf24), 2024, pp. 1-6), and RMA-RVLIF (A. Gigie, R. K. Kanth, A. A. Kumar, T. Chakravarty, and A. Pal, "Lifsar: Local interpolation function based SAR imaging for irregular scanning geometries," in 2024 IEEE SENSORS, 2024, pp. 1-4.). For this comparison, a training dataset consisting of 50 distinct objects was collected, such as watches, spoons, batteries, metal plates, mobile phones, and coke cans, all placed inside a concealed box at a distance of $Z_0$ = 20 cm. Training involved 20 randomly sampled freehand scanning trajectories, spanning from very sparse sampling (20% of the entire $s_{hr}$) to very dense sampling (95% of the entire $s_{hr}$). This setup resulted in approximately 1000 training instances.

To ensure a fair comparison, the total number of model parameters across all competing methods were standardized to be similar to those of the LIF-RMA (0.92 $\pm$ 0.02 million). The LIF-RMA model was trained using the Adam optimizer with a learning rate of 1 $\times$ 10-4, for 200 epochs, and a batch size of 32. LIF-RMA was evaluated across 8 test objects with random sampling scales mimicking an irregular scanning trajectory ranging from 20% to 95% of the entire uniform scan in 5% increments, resulting in a total of 128 test instances.

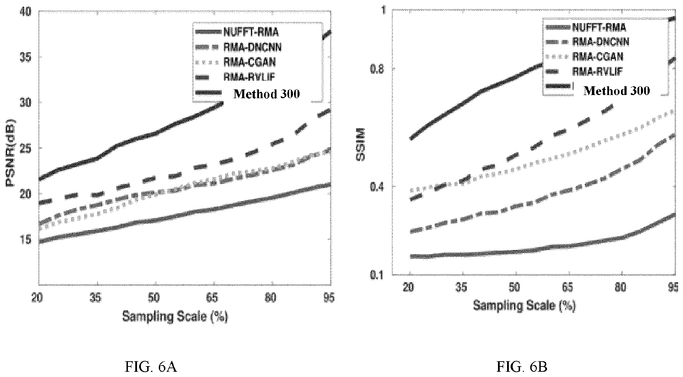

FIGS. 6A and 6B present the average Peak Signal to Noise Ratio (PSNR) and Structural Similarity Index Measure (SSIM) values across various sampling scales. The classical NUFFT-RMA showed poor performance due to interpolation artifacts. Although post-RMA methods like RMA-DNCNN, RMA-CGAN, and RMA-RVLIF reduced some artifacts, their performance remained limited due to their dependence on NUFFT-RMA. The LIF network was found to be improving interpolation leading to reduction in artifacts. Consequently, the LIF-RMA approach achieved superior PSNR and SSIM values compared to all competing methods.

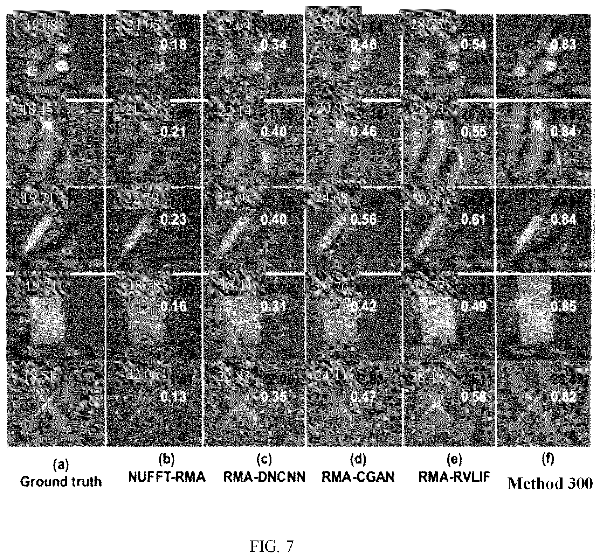

FIG. 7 presents visual reconstruction results for five different objects at a 60% sampling scale, with corresponding PSNR and SSIM values highlighted for each method. The LIF-RMA approach achieved a PSNR improvement of over 5 dB and an SSIM increase of 0.2 compared to state-of-the-art methods. This clearly demonstrates the superior reconstruction quality and minimal artifacts of the proposed method, reinforcing the quantitative results shown in FIGS. 6A and 6B and underscoring its effectiveness in enhancing SAR imaging.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of scanning of irregular trajectories in Synthetic Aperture Radar (SAR) imaging. The embodiment, thus provides a Local Interpolation Function-based Range Migration Algorithm (LIF-RMA) for scanning of irregular trajectories in SAR. Moreover, the embodiments herein further facilitate preservation of phase integrity by applying LIF prior to RMA.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

**1.** A processor implemented method (500), comprising:

receiving (502), via one or more hardware processors, a spatially irregular sampled complex raw data from a radar, as input data, wherein the spatially irregular sampled complex raw data is captured by the radar while moving along a trajectory with an irregular scanning geometry;

transforming (504), via the one or more hardware processors, the spatially irregular sampled complex raw data into a 2D feature map, using a complex-valued encoder of a trained complex-valued Local Interpolation Function (LIF) network;

predicting (506), via the one or more hardware processors, an interpolated complex raw data at one or more missing data points at one or more spatial coordinates, using a plurality of nearest latent codes from the 2D feature map and a plurality of query coordinates corresponding to a plurality of missing data points, by using complex-valued decoder of the trained complex-valued LIF network, wherein the plurality of nearest latent codes mitigate distortions caused by a plurality of irregular sampling and interpolation errors, wherein the predicted interpolated complex raw data is computed using a weighted average of the plurality of nearest latent codes, with associated plurality of weights determined by a Euclidean distance between each of the plurality of query coordinates (x, y) and each of the plurality of nearest latent codes;

transforming (508), via the one or more hardware processors, the interpolated complex raw data into a frequency domain by using a two-dimensional (2D) Fast Fourier Transform; and

generating (510), via the one or more hardware processors, a reconstructed image based on the transformed frequency domain of interpolated complex raw data.

2. The processor implemented method as claimed in claim 1, wherein the spatially irregular sampled complex raw data s, for a discrete frequency $\omega$, is represented as:

$$s(x, y, \omega) = \iiint \rho(x', y', z') e^{-j2kR} \, dx' \, dy' \, dz',$$

where, $(x, y)$ is an array element coordinate that receives a backscattered response, R is distance between the array element coordinate (x, y) and a plurality of target points (x', y', z') in 3-Dimension, and $k$ denotes a wave number.

3. The processor implemented method as claimed in claim 1, wherein the 2D feature map is represented as:

$$M \in C^{H \times W \times D},$$

where, $H$ and W denote the spatial dimensions, and $D$ represents the depth of the feature map.

4. The processor implemented method as claimed in claim 1, wherein complex-valued Local Interpolation Function (LIF) network is trained by iteratively generating prediction of the spatially irregular sampled complex raw data at specific missing coordinates for a training data, such that the generated prediction matches an associated ground truth data,

wherein the ground truth is a training dataset comprising densely sampled, uniformly spaced complex raw radar data, acquired by moving the radar in precise steps to create a dense SAR aperture, wherein the spatially irregular sampled data is iteratively refined at the specific missing coordinates to approximate the ground truth, addressing errors introduced by irregular scanning geometries,

and wherein the LIF network is optimized by minimizing a loss between the predicted spatially irregular sampled data at the specific missing coordinates and the ground truth data.

5. A system (100), comprising:

one or more hardware processors (102);
a communication interface (112); and
a memory (104) storing a plurality of instructions which cause the one or more hardware processors to:

receive a spatially irregular sampled complex raw data from a radar, as input data, wherein the spatially irregular sampled complex raw data is captured by the radar while moving along a trajectory with an irregular scanning geometry;

transform the spatially irregular sampled complex raw data into a two-dimensional (2D) feature map, using a complex-valued encoder of a trained complex-valued Local Interpolation Function (LIF) network;

predict an interpolated complex raw data at one or more missing data points at one or more spatial coordinates, using a plurality of nearest latent codes from the 2D feature map and a plurality of query coordinates corresponding to a plurality of missing data points, by using complex-valued decoder of the trained complex-valued LIF network, wherein the plurality of nearest latent codes mitigate distortions caused by a plurality of irregular sampling and interpolation errors, wherein the predicted interpolated complex raw data is computed using a weighted average of the plurality of nearest latent codes, with associated plurality of weights determined by a Euclidean distance between each of the plurality of query coordinates (x, y) and each of the plurality of nearest latent codes;

transform the interpolated complex raw data into a frequency domain by using a 2D Fast Fourier Transform; and

generate a reconstructed image based on the transformed frequency domain of interpolated complex raw data.

6. The system as claimed in claim 5, wherein the spatially irregular sampled complex raw data s, for a discrete frequency $\omega$, is represented as:

$$s(x, y, \omega) = \iiint \rho(x', y', z') e^{-j2kR} \, dx' \, dy' \, dz',$$

where, $(x, y)$ is an array element coordinate that receives a backscattered response, $R$ is distance between the array element coordinate $(x, y)$ and a plurality of target points $(x', y', z')$ in 3-Dimension, and $k$ denotes a wave number.

7. The system as claimed in claim 5, wherein the 2D feature map is represented as:

$$M \in C^{H \times W \times D},$$

where, $H$ and $W$ denote the spatial dimensions, and $D$ represents the depth of the feature map.

8. The system as claimed in claim 5, wherein the complex-valued Local Interpolation Function (LIF) network is trained by iteratively generating prediction of the spatially irregular sampled complex raw data at specific missing coordinates for a training data, such that the generated prediction matches an associated ground truth data,

wherein the ground truth is a training dataset comprising densely sampled, uniformly spaced complex raw radar data, acquired by moving the radar in precise steps to create a dense SAR aperture, wherein the spatially irregular sampled data is iteratively refined at the specific missing coordinates to approximate the ground truth, addressing errors introduced by irregular scanning geometries, and wherein the LIF network is optimized by minimizing a loss between the predicted spatially irregular sampled data at the specific missing coordinates and the ground truth data.

9. One or more non-transitory machine-readable information storage mediums comprising one or more instructions which when executed by one or more hardware processors cause:

receiving a spatially irregular sampled complex raw data from a radar, as input data, wherein the spatially irregular sampled complex raw data is captured by the radar while moving along a trajectory with an irregular scanning geometry;

transforming the spatially irregular sampled complex raw data into a two-dimensional (2D) feature map, using a complex-valued encoder of a trained complex-valued Local Interpolation Function (LIF) network;

predicting an interpolated complex raw data at one or more missing data points at one or more spatial coordinates, using a plurality of nearest latent codes from the 2D feature map and a plurality of query coordinates corresponding to a plurality of missing data points, by using complex-valued decoder of the trained complex-valued LIF network, wherein the plurality of nearest latent codes mitigate distortions caused by a plurality of irregular sampling and interpolation errors, wherein the predicted interpolated complex raw data is computed using a weighted average of the plurality of nearest latent codes, with associated plurality of weights determined by a Euclidean distance between each of the plurality of query coordinates (x, y) and each of the plurality of nearest latent codes;

transforming the interpolated complex raw data into a frequency domain by using a 2D Fast Fourier Transform; and

generating a reconstructed image based on the transformed frequency domain of interpolated complex raw data.

**10.** The one or more non-transitory machine-readable information storage mediums as claimed in claim 9, wherein the spatially irregular sampled complex raw data s, for a discrete frequency $\omega$, is represented as:

$$s(x, y, \omega) = \iiint \rho(x', y', z')e^{-j2kR}\, dx'\, dy'\, dz',$$

where, $(x, y)$ is an array element coordinate that receives a backscattered response, R is distance between the array element coordinate (x, y) and a plurality of target points $(x', y', z')$ in 3-Dimension, and k denotes a wave number.

**11.** The one or more non-transitory machine-readable information storage mediums as claimed in claim 9, wherein the 2D feature map is represented as:

$$M \in C^{H \times W \times D},$$

where, $H$ and $W$ denote the spatial dimensions, and $D$ represents the depth of the feature map.

**12.** The one or more non-transitory machine-readable information storage mediums as claimed in claim 9, wherein the complex-valued Local Interpolation Function (LIF) network is trained by iteratively generating prediction of the spatially irregular sampled complex raw data at specific missing coordinates for a training data, such that the generated prediction matches an associated ground truth data,

wherein the ground truth is a training dataset comprising densely sampled, uniformly spaced complex raw radar data, acquired by moving the radar in precise steps to create a dense SAR aperture, wherein
the spatially irregular sampled data is iteratively refined at the specific missing coordinates to approximate the ground truth, addressing errors introduced by irregular scanning geometries,
and wherein the LIF network is optimized by minimizing a loss between the predicted spatially irregular sampled data at the specific missing coordinates and the ground truth data.

100

108

MEMORY 104

MODULES 106

REPOSITORY 110

I/O INTERFACE
112

HARDWARE
PROCESSORS 102

FIG. 1

FIG. 2

FIG. 3A

$s_{hr}(x, y, \omega)$     Cost

**Full Scan**

$s_{hr}(x, y, \omega)$   **Random Sampler**

**MIMO radar**

LIF network   $s_{pred}(x, y, \omega)$

**Random Partial Scan**

$s(x, y, \omega)$

FIG. 3B

FIG. 4

receiving, via one or more hardware processors, a spatially irregular sampled complex raw data from a radar, as input data, wherein the spatially irregular sampled complex raw data is captured by the radar while moving along a trajectory with an irregular scanning geometry ⌇502

transforming, via the one or more hardware processors, the spatially irregular sampled complex raw data into a 2D feature map, using a complex-valued encoder of a trained complex-valued Local Interpolation Function (LIF) network ⌇504

predicting, via the one or more hardware processors, an interpolated complex raw data at one or more missing data points at one or more spatial coordinates, using a plurality of nearest latent codes from the 2D feature map and a plurality of query coordinates corresponding to a plurality of missing data points, by using complex-valued decoder of the trained complex-valued LIF network, wherein the plurality of nearest latent codes mitigate distortions caused by a plurality of irregular sampling and interpolation errors, wherein the predicted interpolated complex raw data is computed using a weighted average of the plurality of nearest latent codes, with associated plurality of weights determined by a Euclidean distance between each of the plurality of query coordinates $(x, y)$ and each of the plurality of nearest latent codes ⌇506

transforming, via the one or more hardware processors, the interpolated complex raw data into a frequency domain by using a 2D Fast Fourier Transform ⌇508

generating, via the one or more hardware processors, a reconstructed image based on the transformed frequency domain of interpolated complex raw data ⌇510

500

FIG. 5

FIG. 6A

FIG. 6B

|  (a) | (b) | (c) | (d) | (e) | (f) |
| Ground truth | NUFFT-RMA | RMA-DNCNN | RMA-CGAN | RMA-RVLIF | Method 300 |

FIG. 7

Europäisches
Patentamt

European
Patent Office

Office européen
des brevets

# EUROPEAN SEARCH REPORT

**Application Number**

EP 25 20 3101

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GIGIE ANDREW ET AL: "LIF-SAR: Local Interpolation Function based SAR Imaging for Irregular Scanning Geometries", 2024 IEEE SENSORS, IEEE, 20 October 2024 (2024-10-20), pages 1-4, XP034778680, DOI: 10.1109/SENSORS60989.2024.10784468 [retrieved on 2024-12-17] * page 2; figure 1 * * abstract * ----- | 1-12 | INV. G01S13/90 G01S7/41 |

| | TECHNICAL FIELDS SEARCHED (IPC) |
|---|---|
| | G01S |

The present search report has been drawn up for all claims

| Place of search | Date of completion of the search | Examiner |
|---|---|---|
| Munich | 3 March 2026 | Auinger, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

           .......................................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202521002124

**Non-patent literature cited in the description**

- **C. VASILEIOU** ; **J. SMITH** ; **S. THIAGARAJAN** ; **M. NIGH** ; **Y. MAKRIS** ; **M. TORLAK**. Efficient cnn-based super resolution algorithms for mmwave mobile radar imaging. *2022 IEEE International Conference on Image Processing (ICIP)*, 2022, 3803-3807

- **A. GIGIE** ; **R. K. KANTH** ; **A. KUMAR** ; **T. CHAKRAVARTY** ; **A. PAL**. Cmc-rma: Compressed multi-coset range migration algorithm for mimo-SAR. *2024 IEEE Radar Conference (RadarConf24)*, 2024, 1-6
- **A. GIGIE** ; **R. K. KANTH** ; **A. A. KUMAR** ; **T. CHAKRAVARTY** ; **A. PAL**. Lifsar: Local interpolation function based SAR imaging for irregular scanning geometries. *2024 IEEE SENSORS*, 2024, 1-4